# EUROPÄISCHE PATENTSCHRIFT

(11) **EP 1 745 884 B1**
(45) Veröffentlichungstag und Bekanntmachung des Hinweises auf die Patenterteilung: **21.05.2008**
(21) Anmeldenummer: 05015830.2
(22) Anmeldetag: 21.07.2005
(51) Int. Cl.: B23Q 17/24, G01B 11/00

(54) **Verfahren zur Sitz- oder Unwucht-Prüfung eines Werkzeugs**
Method for detecting a run-out or imbalance of a worktool
Procédé pour détecter un débattement ou un déséquilibre d'un outil

(43) Veröffentlichungstag der Anmeldung: 24.01.2007
(73) Patentinhaber: Cross Hüller GmbH, 71636 Ludwigsburg (DE)
(72) Erfinder: Bayha, Thomas, 71706 Markgröningen (DE); Berger, Andreas, 72622 Nürtingen (DE)
(74) Vertreter: Rau, Manfred

(56) Entgegenhaltungen:
- EP-A- 0 469 414
- DE-A1- 4 238 504
- PATENT ABSTRACTS OF JAPAN Bd. 1999, Nr. 12, 29. Oktober 1999 (1999-10-29) & JP 11 188577 A (OKUMA CORP), 13. Juli 1999 (1999-07-13)

## Beschreibung

Die Erfindung betrifft ein Verfahren zur Sitz- oder Unwucht-Prüfung eines Werkzeugs, das in einer um eine Mittel-Längs-Achse drehantreibbar gelagerten Werkzeugspindel auswechselbar aufgenommen ist.

Eine derartige Werkzeugspindel wird in einer Werkzeugmaschine verwendet. Um eine hohe Bearbeitungsgenauigkeit zu erzielen, sollte das eingesetzte Werkzeug möglichst rund laufen. Abweichungen vom Rundlauf können sich durch einen verunreinigungsbedingten nicht fluchtenden Sitz des Werkzeugs in der Werkzeugspindel oder durch manche Arten von Werkzeug-Unwuchten ergeben. Derartige Unregelmäßigkeiten sind zu erkennen und zu beheben.

Aus der EP 0 881 032 A2 (entsprechend US 6,059,702 A) ist es bekannt beim Einsetzen des Werkzeugs die Anlage-Flächen mit Druckluft oder mit dem Kühlmittel der Werkzeugmaschine zu reinigen. Außerdem kann der korrekte, d. h. fluchtende Sitz des Werkzeugs nach dem Einsetzen mittels einer Druckluft-Beaufschlagung und einer Erfassung des resultierenden Druckabbaus überprüft werden. Hierzu ist aber eine gesonderte Druckmesseinrichtung erforderlich. Außerdem dauert die Prüfung relativ lange, da der zu analysierende Druckabbau üblicherweise nur langsam erfolgt.

Weiterhin ist aus der WO 97/31751 A1 ein Verfahren zur Vermeidung thermisch bedingter Positionsänderungen des Werkzeugs mittels einer Lichtschranke mit einem Sender und einem Empfänger bekannt. Eine Sitz- oder Unwucht-Prüfung wird bei diesem Verfahren nicht vorgenommen.

Aus der DE 42 38 504 A1 ist ein Verfahren zur Unwucht-Prüfung bekannt, bei dem mittels eines Laserstrahls eine Unregelmäßigkeit in Form eines unrunden Werkzeugs erkennbar ist. Nachteilig bei diesem Verfahren ist, dass die Unregelmäßigkeit nicht quantifiziert und spezifiziert werden kann, da grundsätzlich von einer Unrundheit des Werkzeuges selbst ausgegangen wird.

Der Erfindung liegt die Aufgabe zugrunde, ein Verfahren zur Sitz- oder Unwucht-Prüfung bereitzustellen, mit dem einfach und schnell Unregelmäßigkeiten quantifiziert und spezifiziert werden können.

Diese Aufgabe wird bei dem erfindungsgemäßen Verfahren durch die Merkmale des Anspruches 1 gelöst. Die wesentliche Erkenntnis der Erfindung liegt darin, dass ein intermittierender Signalverlauf eine Unregelmäßigkeit, d. h. einen nicht fluchtenden Sitz oder eine Werkzeug-Unwucht, anzeigt. Außerdem lassen sich anhand der dann erfassbaren ersten Relativposition, bei der der intermittierende Signalverlauf erstmalig in Erscheinung tritt, weitere Aussagen über Art und Umfang der Unregelmäßigkeit ableiten. Das erfindungsgemäße Verfahren benötigt praktisch keine gesonderten Komponenten. Es bedient sich insbesondere der ohnehin vorhandenen Mittel zum dreidimensionalen Positionieren der Werkzeugspindel sowie der zur Vermeidung thermisch bedingter Positionsänderungen des Werkzeugs bekannten Lichtschranke. Damit ist der apparative Zusatzaufwand für das erfindungsgemäße Verfahren zur Sitz- und Unwucht-Prüfung im Wesentlichen vernachlässigbar. Außerdem lassen sich sämtliche Arbeitsschritte des erfindungsgemäßen Verfahrens schnell durchführen. Insbesondere ist eine Lichtstrahl-Messung binnen kürzester Zeit möglich. Die Ermittlung und Auswertung der zweiten Relativposition ermöglicht eine genauere Bestimmung der Unregelmäßigkeit. Anhand der beiden erfassten Relativpositionen können sowohl der minimale als auch der maximale Ausschlag einer durch die Unregelmäßigkeit bedingten Taumelbewegung des Werkzeugs ermittelt werden. Insbesondere durch die Bildung eines Differenzwertes aus der ersten und zweiten Relativposition kann auf einfache Weise eine Aussage über den doppelten Ausschlag der Taumelbewegung getroffen werden. Unter Berücksichtigung des so ermittelten doppelten Ausschlags ist eine einfachere und bessere Auswertung möglich.Der Vergleich des Differenzwertes mit vorab bestimmten und gespeicherten Fehler-Referenzwerten erlaubt in einfacher Weise die aktuelle Unregelmäßigkeit anhand einer Tabelle mit bekannten Unregelmäßigkeit-Typen näher zu spezifizieren.

Bei der Ausgestaltung nach Anspruch 2 erfolgt die Relativbewegung mittels ohnehin zum Positionieren der Werkzeugspindel vorhandener Mittel.

Besonders einfach lässt sich die Relativbewegung gemäß der Variante nach Anspruch 3 durchführen, da einer der für die beiden Haupt-Verschieberichtungen vorgesehenen Antriebe außer Betrieb bleiben kann.

Bei den beiden gemäß den Ansprüchen 4 und 5 vorgesehenen Varianten für die anfängliche Positionierung von Werkzeugspindel und Lichtstrahl sowie für die folgende Relativbewegung, sind definierte Ausgangs- und Messbedingungen gewährleistet.

Die Variante gemäß Anspruch 6 zeichnet sich durch einen besonders kleinen Strahldurchmesser aus, so dass eine hohe Messgenauigkeit resultiert.

Weitere Merkmale, Vorteile und Einzelheiten der Erfindung ergeben sich aus der nachfolgenden Beschreibung von Ausführungsbeispielen anhand der Zeichnung. Es zeigt:
- Fig. 1: eine Werkzeugmaschine mit einer dreidimensional positionierbaren und drehantreibbaren Werkzeugspindel zur Aufnahme eines Werkzeugs und mit einer Lichtschranke in Frontansicht,
- Fig. 2: einen Teilquerschnitt der Werkzeugspindel gemäß Fig. 1 mit fluchtendem Sitz des eingebauten Werkzeugs,
- Fig. 3: einen Teilquerschnitt der Werkzeugspindel gemäß Fig. 1 mit nicht fluchtendem Sitz des eingebauten Werkzeugs,
- Fig. 4: eine schematisierte Gegenüberstellung eines fluchtenden und eines verunreinigungsbedingt nicht fluchtenden Sitzes des nicht rotierenden Werkzeugs,
- Fig. 5: eine schematisierte Gegenüberstellung eines Werkzeug-Umlaufs bei fluchtendem und nicht fluchtendem Sitz und
- Fig. 6a - 6d: Diagramme eines an der Lichtschranke gemäß Fig. 1 erfassten Empfangs-Signals mit kontinuierlichem und intermittierendem Signalverlauf.

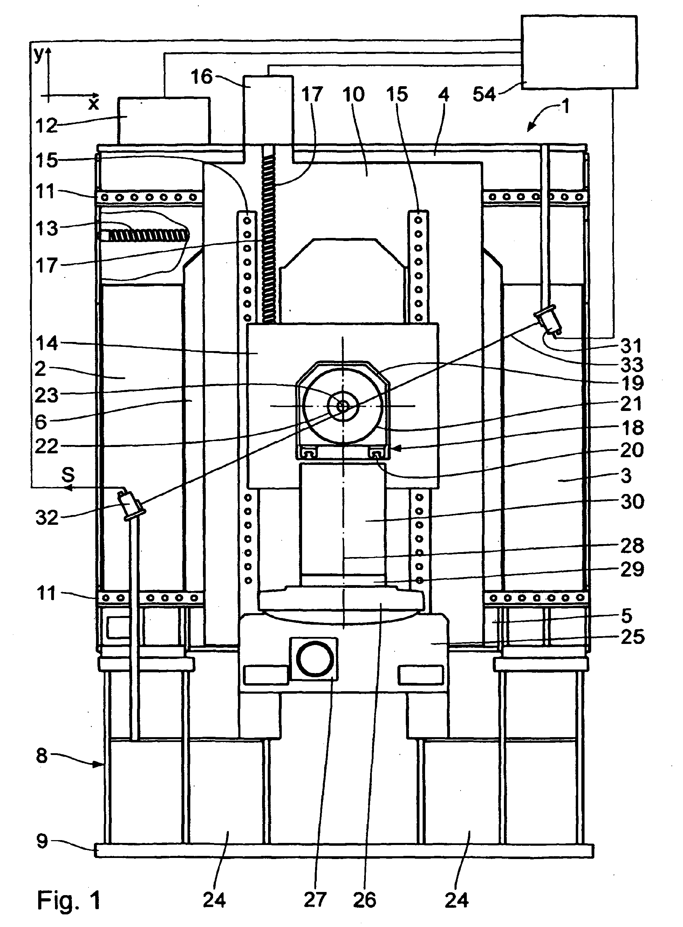

Die in Fig. 1 dargestellte Werkzeugmaschine weist einen - in der horizontalen z-Richtung gesehen - rechteckigen, und zwar etwa quadratischen, durch einen Rahmen gebildeten Ständer 1 auf, der durch sich in y-Richtung erstreckende, vertikale Seiten-Stützen 2, 3 und jeweils einen diese verbindenden horizontalen, sich in x-Richtung erstreckenden oberen Quer-Holm 4 bzw. unteren Quer-Holm 5 gebildet ist. Die Seiten-Stützen 2, 3 und die Quer-Holme 4, 5 sind durch Hohlprofile gebildet und umschließen einen Innenraum 6, der - in z-Richtung gesehen - beidendig offen ist, und zwar insbesondere zu einem Arbeitsraum 7 hin. Der Ständer 1 ist über ein Untergestell 8 auf einem Fundament bzw. einer Fundament-Platte 9 abgestützt.

An der dem Arbeitsraum 7 zugewandten Stirnseite des Ständers 1 ist ein ebenfalls rahmenartig ausgebildeter x-Schlitten 10 in x-Richtung verschiebbar angeordnet. Hierzu ist an den Quer-Holmen 4, 5 jeweils eine x-Führungsschiene 11 angebracht, auf denen der x-Schlitten 10 geführt ist. Der Antrieb des x-Schlittens 10 erfolgt mittels eines x-Motors 12 über eine sich in x-Richtung erstreckende, in den Seiten-Stützen 2, 3 des Ständers 1 gelagerte x-Kugelrollspindel 13.

Auf der dem Arbeitsraum 7 zugewandten Stirnseite des x-Schlittens 10 ist ein in y-Richtung, also vertikal, verschiebbarer y-Schlitten 14 verschiebbar geführt. Hierzu ist an den Seitenbereichen des rahmenartigen x-Schlittens 10 jeweils eine y-Führungsschiene 15 angebracht, auf der der y-Schlitten 14 verschiebbar geführt ist. Der Antrieb des y-Schlittens 14 erfolgt mittels eines auf dem x-Schlitten 10 angebrachten y-Motors 16 über eine y-Kugelrollspindel 17.

Auf dem y-Schlitten 14 befindet sich eine als z-Schlitten 18 ausgebildete Werkzeugspindel-Einheit. Diese weist einen gehäuseartige Pinole 19 auf, die auf im y-Schlitten 14 angebrachten z-Führungsschienen 20 verschiebbar geführt ist. Die Verschiebung in z-Richtung erfolgt in üblicher Weise mittels eines in der Zeichnung nicht dargestellten Motors. In der Pinole 19 ist ein im Wesentlichen jeweils Kreisquerschnitt aufweisendes Werkzeug-Gehäuse 21 drehfest und in z-Richtung unverschiebbar angeordnet, in dem wiederum die eigentliche Werkzeugspindel 22 um eine in z-Richtung verlaufende Mittel-Längs-Achse 23 drehantreibbar gelagert ist.

Im Arbeitsraum 7 ist vor dem Ständer 1 auf der Fundament-Platte 9 ein Werkstück-Träger-Bett 24 gelagert, auf dem ein nach Art einer Brücke ausgebildeter Werkstück-Träger 25 abgestützt ist. Auf dem Werkstück-Träger 25 ist ein B-Drehtisch 26 angeordnet, der mittels eines am Werkstück-Träger 25 angebrachten B-Dreh-Motors 27 um eine vertikale, also zur y-Richtung parallel verlaufende, B-Drehachse 28 drehantreibbar ist. Auf dem y-Drehtisch 26 ist ein Werkstück-Träger 29 angebracht, der ein zu bearbeitendes Werkstück 30 aufnehmen kann.

Soweit die Werkzeugmaschine bis hierher beschrieben ist, ist sie im Grundsatz bekannt und in der Praxis üblich.

Vor dem Ständer 1 im Bereich des Arbeitsraums 7 ist vor der Seiten-Stütze 3 ein Laser-Sender 31 angeordnet, dem ein Laser-Empfänger 32 zugeordnet ist, der vor der gegenüberliegenden Seiten-Stütze 2 auf dem Untergestell 8 abgestützt ist. Vom Laser-Sender 31 kann ein Lasersignal, d. h. ein Laser-Lichtstrahl 33 zum Laser-Empfänger 32 gesendet werden. Der Laser-Sender 31 und der Laser-Empfänger 32 sind ortsfest an der Werkzeugmaschine angebracht. Sie bilden eine Lichtschranke. Auf die Einzelheiten wird weiter unten noch eingegangen.

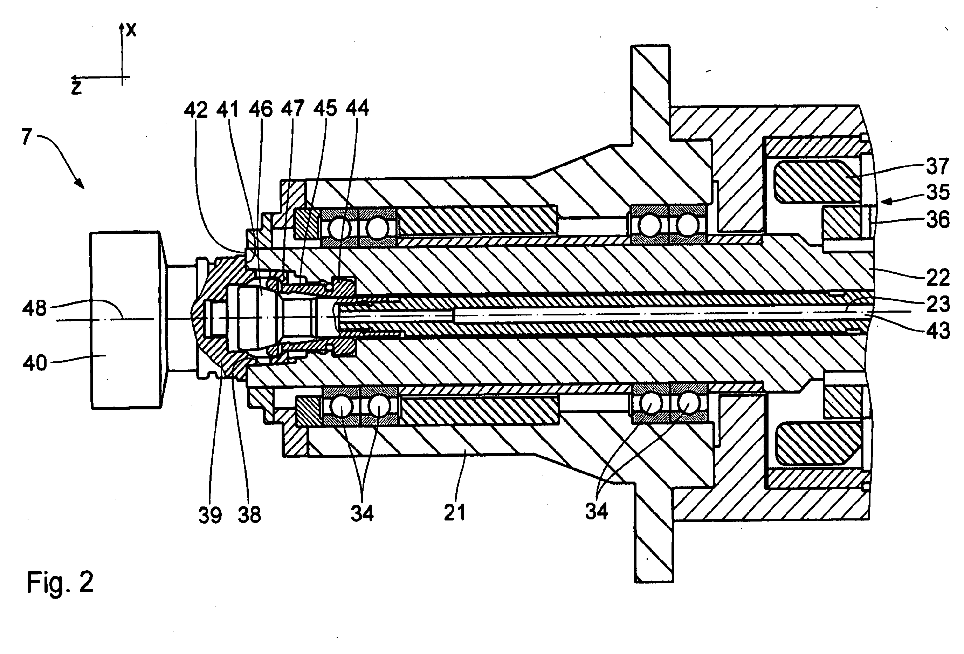

Wie Fig. 2 erkennen lässt, ist die Werkzeugspindel 22 als Hohlwelle ausgebildet, die mittels Wälzlagern 34 im Werkzeugspindel-Gehäuse 21 drehbar gelagert ist. In Fig. 2 rechts ist ein Teil des Spindel-Antriebs-Motors 35 erkennbar, nämlich die drehfest mit der Werkzeugspindel 22 verbundenen Rotor-Pakete 36 und die drehfest im Werkzeugspindel-Gehäuse 21 befindlichen Stator-Wickelköpfe 37.

Die Werkzeugspindel 22 ist an ihrem dem Arbeitsraum 7 zugewandten freien Ende mit einer sich konisch von außen nach innen verjüngenden Aufnahme 38 versehen, in die ein Hohlschaft-Kegel 39 eines aufzunehmenden Werkzeugs 40 eingesetzt wird. Das Werkzeug weist weiterhin eine radial zur Mittel-Längs-Achse 23 verlaufende Anlage-Fläche 41 auf, die bei einem fluchtenden Sitz des Werkzeugs 40 in der Werkzeugspindel 22 an einer radial zur Achse 23 verlaufenden Stirn-Fläche 42 der Werkzeugspindel 22 anliegt.

In der als Hohlwelle ausgebildeten Werkzeugspindel 22 ist eine Spann-Stange 43 angeordnet, mittels derer eine Spann-Zange 44 betätigt wird, die in den Hohlschaft-Kegel 39 eingreift. Die Spann-Zange 44 weist einzelne Spann-Elemente 45 auf, die bei einer Bewegung der Spann-Stange 43 in die Werkzeugspindel 22 hinein mittels eines Spreiz-Konus 46 nach außen gedrückt werden und entsprechende Vorsprünge 47 im Hohlschaft-Kegel 39 hintergreifen, wodurch das Werkzeug 40 mit der Werkzeugspindel 22 verspannt wird. Eine solche Ausgestaltung einer Werkzeugspindel 22 einschließlich einer Betätigungseinheit für die Spann-Stange 43 ist bekannt und in der Praxis allgemein üblich.

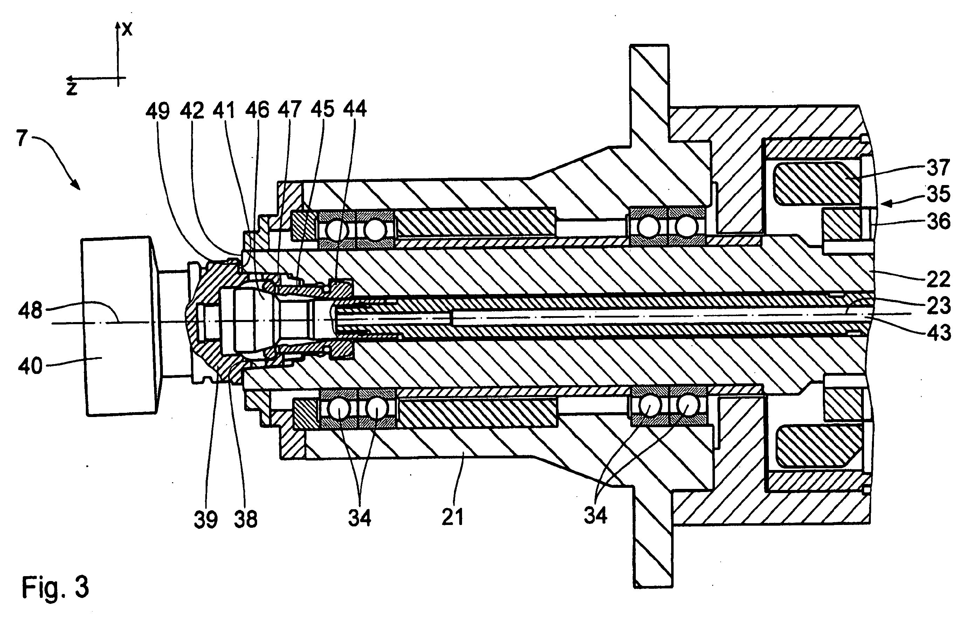

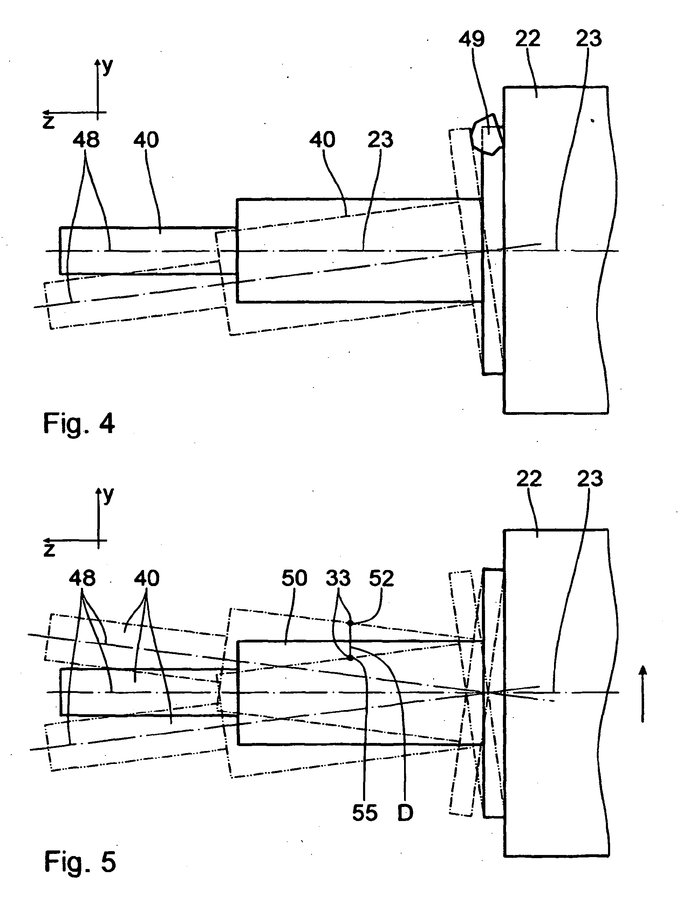

In Fig. 2 ist dargestellt, dass das Werkzeug 40 derart korrekt in die Werkzeugspindel 22 eingebaut ist, dass die Mittel-Längs-Achse 48 des Werkzeugs 40 mit der Mittel-Längs-Achse 23 der Werkzeugspindel 23 fluchtet. Es kann aber auch sein, dass die Achse 48 mit der Achse 23 nicht fluchtet. Dies ist beispielsweise dann der Fall, wenn sich zwischen der Anlage-Fläche 41 und der Stirn-Fläche 42 eine Verunreinigung 49 in Form eines Metallspanes oder dergleichen befindet. In einem solchen Fall beschreibt das Werkzeug 40 beim Drehantrieb der Werkzeugspindel 42 eine Taumelbewegung relativ zur Werkzeugspindel 22. In Fig. 3 ist dies für die Ausgestaltung der Werkzeugspindel 22 nach Fig. 2 dargestellt. In Fig. 4 ist ein solcher nicht fluchtender Einbau des Werkzeugs 40 strichpunktiert gegenüber der fluchtenden, ausgezogen dargestellten Position dargestellt. In Fig. 5 ist strichpunktiert der unrunde Umlauf des Werkzeugs 40 im Vergleich zum ausgezogen dargestellten fluchtenden Werkzeug 40 dargestellt. Außer der Verunreinigung 49 kann auch eine Unwucht im Werkzeug 40 eine derartige Taumelbewegung hervorrufen. Beide Ursachen werden im Folgenden unter dem Begriff Unregelmäßigkeit zusammengefasst.

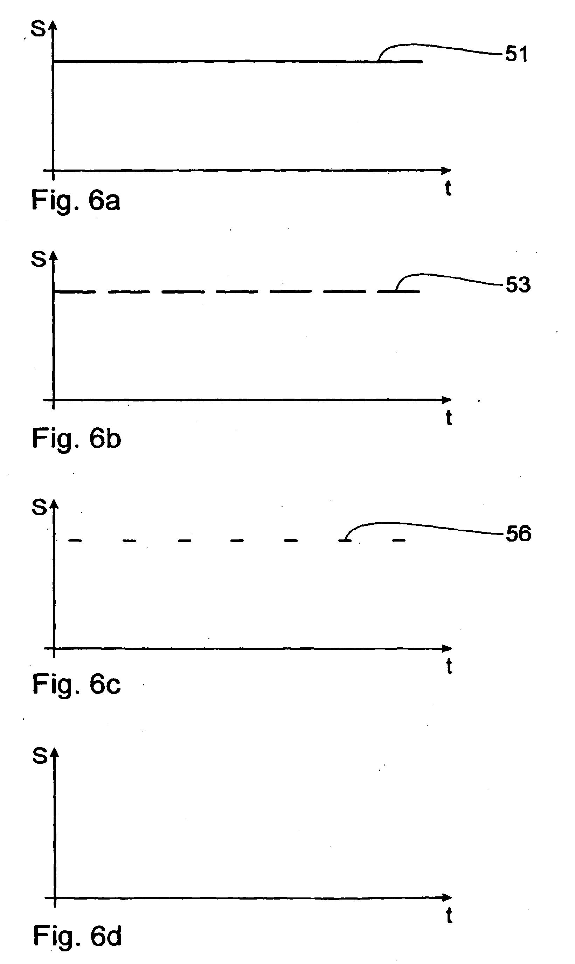

Im Folgenden wird auch unter Bezugnahme auf die Diagramme gemäß Fig. 6a bis 6d das Verfahren beschrieben, mittels dessen ein unrunder Umlauf des Werkzeugs 40 erfasst und ausgewertet wird, wodurch überprüft wird, ob das Werkzeug 40 fluchtend in der Werkzeugspindel 22 sitzt o-der/und ob es eine figürlich nicht näher dargestellte Unwucht aufweist.

Die Werkzeugspindel 22 mit dem eingebauten Werkzeug 40 wird in z-Richtung so angeordnet, dass sich ein einen runden Querschnitt aufweisender Messabschnitt 50 des Werkzeugs 40 zwischen dem Laser-Sender 31 und dem Laser-Empfänger 32 befindet. Mittels des x-Schlittens 10 und/oder des y-Schlittens 14 lässt sich der Messabschnitt 50 dann in der x-y-Ebene relativ zum Laser-Lichtstrahl 33 verschieben, wobei ein Abstand zwischen der Mittel-Längs-Achse 23 und einer Strahlrichtung des Laser-Lichtstrahls 33 variiert.

Die Werkzeugspindel 22 wird in Rotation versetzt und in eine Anfangsposition in der x-y-Ebene gebracht, bei der der Laser-Lichtstrahl 33 am Messabschnitt 50 vorbeiläuft, auf den Laser-Empfänger 32 auftrifft und dort ein Empfangs-Signal S hervorruft. Die in Fig. 5 gezeigte Taumelbewegung des Werkzeugs 40 wird in dieser Anfangsposition nicht von dem Laser-Lichtstrahl 33 erfasst. Demnach hat das Empfangs-Signal S einen im Diagramm gemäß Fig. 6a über einer Zeit t aufgetragenen kontinuierlichen Signalverlauf 51.

Daraufhin wird die Werkzeugspindel 22 relativ zum Lichtstrahl 33 bewegt, indem mittels des y-Motors 16 eine in Fig. 5 durch den Pfeil angedeutete Verschiebung in y-Richtung vorgenommen wird. Dies erfolgt so lange, bis der Laser-Lichtstrahl 33 erstmals den Bereich trifft, der von der Taumelbewegung des nicht fluchtend eingesetzten Werkzeugs 40 überdeckt wird. An diesem äußeren Rand 52 des von der Taumelbewegung erfassten Bereichs hat das Empfangs-Signal S einen im Diagramm gemäß Fig. 6b wiedergegebenen intermittierenden Signalverlauf 53. Die zugehörige Position der Werkzeugspindel 22 wird zur weiteren Auswertung in einer Steuer- und Auswerte-Einheit 54 erfasst und gespeichert. Die Steuer- und Auswerte-Einheit 54 ist an den Laser-Sender 31, den Laser-Empfänger 32 sowie an den x- und y-Motor 12 bzw. 16 angeschlossen, so dass die jeweils aktuelle Position der Werkzeugspindel 22 in der x-y-Ebene in der Steuer- und Auswerte-Einheit 54 bekannt ist. Bei einer Erfassung des Rands 52 durch den Laser-Lichtstrahl 33 resultieren im Signalverlauf 52 Unterbrechungen von nur sehr kurzer Zeitdauer.

Solange der Laser-Lichtstrahl 33 den von der Taumelbewegung erfassten Bereich trifft, wird er pro Vollumdrehung der Werkzeugspindel 22 für eine gewisse Zeitdauer, nämlich die Unterbrechungsdauer, durch das taumelnde Werkzeug 40 vom Laser-Empfänger 32 abgeschottet. Während der restlichen Umdrehungsdauer gelangt der Laser-Lichtstrahl 33 dagegen zum Laser-Empfänger 32.

Die Unterbrechungsdauer steigt mit zunehmender Verschiebung der Werkzeugspindel 33 in y-Richtung an, bis der Laser-Lichtstrahl 33 den inneren Rand 55 des von der Taumelbewegung erfassten Bereichs erreicht. Dann hat das Empfangs-Signal S letztmals einen im Diagramm gemäß Fig. 6c wiedergegebenen intermittierenden Signalverlauf 56, der sehr lange Unterbrechungen aufweist. Auch diese Position der Werkzeugspindel 22 wird in der Steuer- und Auswerte-Einheit 54 zur weiteren Auswertung erfasst und gespeichert.

Bei einer weiteren Verschiebung der Werkzeugspindel 33 in y-Richtung wird der Laser-Lichtstrahl 33 vollständig vom Messabschnitt 50 abgeschottet und am Laser-Empfänger 32 wird kein Empfangs-Signal S detektiert. Dieses im Diagramm gemäß Fig. 6d gezeigte Fehlen eines Empfangs-Signals S wird hier als kontinuierlicher Signalverlauf verstanden.

In Fig. 5 ist der Laser-Lichtstrahl 33 beim Erreichen des äußeren und inneren Randes 52 bzw. 55 des von der Taumelbewegung erfassten Bereichs dargestellt. Aus den für diese beiden Grenzfälle gespeicherten Positionen wird mittels einer Differenzbildung und gegebenenfalls einer weiteren Signalbearbeitung die Größe der Taumelbewegung, insbesondere ihr doppelter Ausschlag D, abgeleitet. Anhand eines Vergleichs mit bekannten Daten, die auf vergleichbare Art und Weise für verschiedene eine Taumelbewegung verursachende Unregelmäßigkeiten ermittelt und als Fehler-Referenzwerte gespeichert worden sind, wird die Ursache der aktuellen Taumelbewegung, beispielsweise also die Verunreinigung 49, näher spezifiziert. Anschließend wird entschieden, ob die Unregelmäßigkeit noch tolerierbar ist oder ob das Werkzeug 40 neu einzusetzen oder gegen ein anderes auszutauschen ist.

Grundsätzlich kann die Verschiebung der Werkzeugspindel 22 auch in eine beliebige andere Richtung innerhalb der x-y-Ebene erfolgen, so lange zumindest einer der beiden Ränder 52 und 55 des von der Taumelbewegung erfassten Bereichs im Verlauf der Verschiebebewegung vom Laser-Lichtstrahl 33 überquert wird und sich das charakteristische erst- oder letztmalige Auftreten des intermittierenden Signalverlaufs einstellt. Lediglich eine Verschiebung parallel zur Strahlrichtung des Laser-Lichtstrahls 33 ist ungeeignet.

Außerdem ist es möglich, den Laser-Lichtstrahl 33 anfangs auf die Mittel-Längs-Achse 23 zu richten und den von der Taumelbewegung erfassten Bereich in entgegengesetzter Richtung durchlaufen zu lassen, so dass für das Empfangs-Signal S eine umgekehrte zeitliche Abfolge der in Fig. 6a bis 6d gezeigten Signalverläufe resultiert. Weiterhin können der innere und der äußere Rand 55 bzw. 52 des von der Taumelbewegung erfassten Bereichs mittels zweier, nacheinander durchgeführter Messläufe ermittelt werden.

Ebenso ist es möglich, dass die Auswertung nur anhand einer Position der Werkzeugspindel 22 erfolgt. Die Position kann dabei entweder für den inneren oder den äußeren Rand 55 bzw. 52 des von der Taumelbewegung erfassten Bereichs bestimmt und abgespeichert worden sein. Diese Information ist ausreichend, um den maximalen bzw. minimalen Ausschlag der Taumelbewegung zu ermitteln. Gegebenenfalls können dann bei der weiteren Auswertung bekannte geometrische Daten des Werkzeugs 40 mit berücksichtigt werden, um die Unregelmäßigkeit näher zu spezifizieren.

Obwohl der Laser-Lichtstrahl 33 aufgrund seines geringen Strahldurchmessers besonders genaue Resultate liefert, ist grundsätzlich auch ein anderer Lichtstrahl oder eine andere Strahlungsart geeignet.

## Patentansprüche

1. Verfahren zur Sitz- oder Unwucht-Prüfung eines Werkzeugs (40), das in einer um eine Mittel-Längs-Achse (23) drehantreibbar gelagerten Werkzeugspindel (22) auswechselbar aufgenommenen ist und das einen Messabschnitt (50) mit rundem Querschnitt aufweist, mit folgenden Arbeitsschritten:
- - die Werkzeugspindel (22) wird in eine Rotation um die Mittel-Längs-Achse (23) versetzt,
- ein Lichtstrahl (33) wird von einem Sender (31) mit einer auf einen Empfänger (32) gerichteten und zur Mittel-Längs-Achse (23) senkrechten Strahlrichtung kontinuierlich gesendet, wobei
-- der Messabschnitt (50) zwischen dem Sender (31) und dem Empfänger (32) angeordnet ist, und
-- der Empfänger (32) aus dem ankommenden Lichtstrahl (33) ein Empfangs-Signal erzeugt,
- die rotierende Werkzeugspindel (22) und der Lichtstrahl (33) werden unter monotoner Veränderung eines Abstands zwischen der Mittel-Längs-Achse (23) und der Strahlrichtung relativ zueinander bewegt,
- es wird eine erste Relativposition zwischen der Werkzeugspindel (22) und dem Lichtstrahl (33), bei der das Empfangs-Signal erstmalig einen intermittierenden Signalverlauf aufweist, erfasst und hinsichtlich eines nicht fluchtenden Sitzes des Werkzeugs (40) in der Werkzeugspindel (22) oder hinsichtlich einer Werkzeug-Unwucht ausgewertet,
- es wird eine zweite Relativposition zwischen der Werkzeugspindel (22) und dem Lichtstrahl (33), bei der das Empfangs-Signal letztmalig einen intermittierenden Signalverlauf aufweist, erfasst und ausgewertet.
- aus der ersten und der zweiten Relativposition wird ein Differenzwert gebildet, und
- der Differenzwert wird mit vorab bestimmten und gespeicherten Fehler-Referenzwerten verglichen.

2. Verfahren nach Anspruch 1, **dadurch gekennzeichnet,**
**dass** zur Relativbewegung zwischen der rotierenden Werkzeugspindel (22) und dem Lichtstrahl (33) die rotierende Werkzeugspindel (22) verschoben wird.

3. Verfahren nach Anspruch 2, **dadurch gekennzeichnet,**
**dass** zwei zur Mittel-Längs-Achse (23) senkrechte Haupt-Verschieberichtungen vorgesehen sind, und die rotierende Werkzeugspindel (22) längs einer der beiden Haupt- Verschieberichtungen verschoben wird.

4. Verfahren nach Anspruch 1, **dadurch gekennzeichnet,**
**dass** die rotierende Werkzeugspindel (22) und der Lichtstrahl (33) vor dem Beginn der Relativbewegung derart zueinander angeordnet werden, dass sich die Mittel-Längs-Achse (23) und die Strahlrichtung kreuzen, und der Abstand zwischen der Mittel-Längs-Achse (23) und der Strahlrichtung während der Relativbewegung vergrößert wird.

5. Verfahren nach Anspruch 1, **dadurch gekennzeichnet,**
**dass** die rotierende Werkzeugspindel (22) und der Lichtstrahl (33) vor dem Beginn der Relativbewegung derart zueinander angeordnet werden, dass der Lichtstrahl (33) am Messabschnitt (50) vorbeiläuft, und der Abstand zwischen der Mittel-Längs-Achse (23) und der Strahlrichtung während der Relativbewegung verkleinert wird.

6. Verfahren nach Anspruch 1, **dadurch gekennzeichnet,**
**dass** als Lichtstrahl ein Laser- Lichtstrahl (33) vorgesehen wird.

## Claims

1. Method for testing the fit or imbalance of a tool (40) which is replaceably accommodated in a tool spindle (22) which is mounted so that it may be driven in rotation about a central longitudinal axis (23) and which has a measurement portion (50) with a round cross-section, the method comprising the following working steps:
- the tool spindle (22) is set into rotation about the central longitudinal axis (23),
- a light beam (33) is emitted continuously from a transmitter (31) with a radiating direction perpendicular to the central longitudinal axis (23) and directed onto a receiver (32), wherein
-- the measurement portion (50) is located between the transmitter (31) and the receiver (32), and
-- the receiver (32) generates a receiving signal from the incoming light beam (33),
- the rotating tool spindle (22) and the light beam (33) are moved relative to one another during a monotonous change in the distance between the central longitudinal axis (23) and the direction of radiation,
- a first relative position is detected between the tool spindle (22) and the light beam (33), in which position the receiving signal has for the first time an intermittent signal path, and is evaluated with respect to a non-aligning fit of the tool (40) in the tool spindle (22) or with respect to an imbalance of the tool,
- a second relative position is detected between the tool spindle (22) and the light beam (33), in which position the receiving signal has an intermittent signal path for the last time, and is then evaluated,
- a difference value is produced from the first and second relative positions, and
- the difference value is compared with previously determined and stored error reference values.

2. Method according to claim 1, **characterised in that** the rotating tool spindle (22) is displaced for the relative movement between the rotating tool spindle (22) and the light beam (33).

3. Method according to claim 2, **characterised in that** two main displacement directions, perpendicular to the central longitudinal axis (23), are provided and the rotating tool spindle (22) is moved in one of the two main displacement directions.

4. Method according to claim 1, **characterised in that** the rotating tool spindle (22) and the light beam (33) are positioned with respect to one another before the start of the relative movement such that the central longitudinal axis (23) and the direction of radiation intersect and the distance between the central longitudinal axis (23) and the direction of radiation is increased during the relative movement.

5. Method according to claim 1, **characterised in that** the rotating tool spindle (22) and the light beam (33) are positioned with respect to one another before the start of the relative movement such that the light beam (33) passes over the measurement portion (50), and the distance between the central longitudinal axis (23) and the direction of radiation is reduced during the relative movement.

6. Method according to claim 1, **characterised in that** a laser light beam (33) is provided as the light beam.

## Revendications

1. Procédé de vérification du logement ou du déséquilibre d'un outil (40) qui est reçu de manière interchangeable dans une broche d'outil (22) logée de manière à pouvoir être entraînée en rotation autour d'un axe médian, longitudinal (23) et qui présente une section de mesure (50) avec une section ronde, comportant les étapes de procédé suivantes :
- la broche d'outil (22) est décalée en une rotation autour d'un axe médian, longitudinal (23),
- un rayon lumineux (33) est émis en continu par un émetteur (31) avec un sens de rayon dirigé vers un récepteur (32) et perpendiculaire à l'axe médian, longitudinal (23),
-- la section de mesure (50) étant disposée entre l'émetteur (31) et le récepteur (32), et
-- le récepteur (32) générant un signal de réception à partir du rayon lumineux (33) arrivant,
- la broche d'outil (22) rotative et le rayon lumineux (33) sont déplacés l'un par rapport à l'autre en modifiant de manière monotone un écart entre l'axe médian, longitudinal (23) et le sens de rayon,
- une première position relative entre la broche d'outil (22) et le rayon lumineux (33) est détectée, dans laquelle le signal de réception présente pour la première fois un développement de signal intermittent et est évaluée en ce qui concerne un logement non aligné de l'outil (40) dans la broche d'outil (22) ou en ce qui concerne un déséquilibre de l'outil,
- une seconde position relative entre la broche d'outil (22) et le rayon lumineux (33) est détectée et évaluée, dans laquelle le signal de réception présente pour la dernière fois un développement de signal intermittent,
- une valeur différentielle est formée à partir de là première et de la seconde position relative,
- la valeur différentielle est comparée aux valeurs de référence d'erreur enregistrées et déterminées auparavant.

2. Procédé selon la revendication 1, **caractérisé en ce**
**que** la broche d'outil (22) rotative est déplacée pour le mouvement relatif entre la broche d'outil (22) rotative et le rayon lumineux (33).

3. Procédé selon la revendication 2, **caractérisé en ce**
**que** deux sens de déplacement principaux perpendiculaires à l'axe médian, longitudinal (23) sont prévus, et la broche d'outil (22) rotative est déplacée le long d'un des deux sens de déplacement principaux.

4. Procédé selon la revendication 1, **caractérisé en ce**
**que** la broche d'outil (22) rotative et le rayon lumineux (33) sont disposés avant le début du mouvement relatif l'un vers l'autre de telle sorte que l'axe médian, longitudinal (23) et le sens de rayon se croisent et l'écart entre l'axe médian, longitudinal (23) et le sens de rayon soit augmenté pendant le mouvement relatif.

5. Procédé selon la revendication 1, **caractérisé en ce**
**que** la broche d'outil (22) rotative et le rayon lumineux (33) sont disposés avant le début du mouvement relatif l'un vers l'autre de telle sorte que le rayon lumineux (33) passe le long de la section de mesure (50), et l'écart entre l'axe médian, longitudinal (23) et le sens de rayon soit réduit pendant le mouvement relatif.

6. Procédé selon la revendication 1, **caractérisé en ce**
**qu'**un rayon lumineux laser (33) est prévu comme rayon lumineux.
